# EUROPÄISCHE PATENTSCHRIFT

(11) **EP 4 015 180 B1**
(45) Veröffentlichungstag und Bekanntmachung des Hinweises auf die Patenterteilung: **07.08.2024**
(21) Anmeldenummer: 21210484.8
(22) Anmeldetag: 25.11.2021
(51) Int. Cl.: B29B 7/90, B29B 7/92, B29B 7/00, B32B 27/08, B32B 27/20, B32B 27/30, B32B 27/32, B32B 27/34, B32B 27/36, B32B 27/40, C08J 3/20, C08J 5/18, B29B 7/38

(54) **VERFAHREN ZUR HERSTELLUNG EINER KUNSTSTOFFSCHICHT**
METHOD FOR PRODUCING A SYNTHETIC COATING
PROCÉDÉ DE FABRICATION D'UN REVÊTEMENT EN MATIÈRE PLASTIQUE

(30) Priorität: 15.12.2020 DE 102020215947
(43) Veröffentlichungstag der Anmeldung: 22.06.2022
(73) Patentinhaber: Benecke-Kaliko AG, 30419 Hannover (DE)
(72) Erfinder: Neumann, Thorsten, 30165 Hannover (DE); Neumann, Surekha, 30165 Hannover (DE); Knecht, Matthias, 30165 Hannover (DE); Wittmann, Gabriele, 30165 Hannover (DE)
(74) Vertreter: Continental Corporation

(56) Entgegenhaltungen:
- JP-A- 2010 173 169
- US-A1- 2004 071 903
- US-A1- 2013 154 151
- US-A1- 2019 256 700

## Beschreibung

Die Erfindung betrifft ein Verfahren zur Herstellung einer Kunststoffschicht auf Basis eines Kunststoffrohmaterials, bei welchem das Kunststoffrohmaterial mit Zusatzstoffen vermischt und anschließend zu der Kunststoffschicht ausgeformt wird.

Derartige Verfahren sind vielfältig bekannt, wobei unterschiedlichste, vorzugsweise thermoplastische Kunststoffrohmaterialien sowie Zusatzstoffe zum Einsatz kommen. Beispiele derartiger Zusatzstoffe umfassen Farbstoffe und Pigmente, Weichmacher, Füllstoffe sowie Hilfsstoffe, etwa Verlaufshilfsmittel, Entschäumer und Gleitmittel. Bei diesen Zusatzstoffen kann es sich beispielsweise um mineralische Rohstoffe und Pigmente handeln oder es werden Fasern verwendet. Die bislang verwendeten Zusatzstoffe stammen üblicherweise nicht aus nachhaltigen Quellen, sondern werden gezielt für den Anwendungszweck hergestellt, wie beispielhaft in der US 2019/256700 A1 beschrieben. Dies wirkt sich negativ auf die Umweltbilanz aus.

Ein Verfahren zur Herstellung einer Kunststoffschicht, die neben einem Polyolefin auch ein nachwachsendes Biopolymer zur Verbesserung der Umweltbilanz enthält, ist beispielsweise aus der US 2013/154151 A1 bekannt geworden.

Aufgabe der Erfindung ist es, ein Verfahren der eingangs genannten Art vorzuschlagen, mit welchem Kunststoffschichten hergestellt werden können, welche im Rahmen eines Upcyclings auf nachhaltige Rohstoffquellen zurückgreifen und insoweit eine verbesserte Umweltbilanz aufweisen.

Zur Lösung der gestellten Aufgabe wird ein Verfahren nach Anspruch 1 vorgeschlagen; bevorzugte Ausführungen des Verfahrens sind Gegenstand der abhängigen Ansprüche.

Zur Lösung der gestellten Aufgabe wird erfindungsgemäß vorgeschlagen, dass als Zusatzstoff für das Kunststoffrohmaterial Teesatz verwendet wird, dessen Wassergehalt auf 0-20 % zum Zeitpunkt der Vermischung mit dem Kunststoffmaterial eingestellt ist. Teesatz, d. h. der nach Zubereiten eines Teegetränks zurückbleibende Aufgussrückstand, der überwiegend aus Pflanzenknospen und Pflanzenblättern besteht, wird bislang üblicherweise entsorgt. Sofern zur Zubereitung des Tees auch ein Teebeutel verwendet wurde, wird dieser üblicherweise gemeinsam mit dem Teesatz entsorgt. Dementsprechend fallen große Mengen Teesatz sowie ggf. Teebeutel an. Teebeutel werden heutzutage hauptsächlich aus zwei unterschiedlichen Materialien hergestellt. Zum einen bestehen diese Beutel aus Zellulose, welche mit Polyolefinen, insbesondere Polypropylen beschichtet ist. Zum anderen werden Teebeutel aus biologisch abbaubarer Poly-Milchsäure (PLA) oder einem Polyestercopolymer hergestellt.

Im Rahmen der Erfindung wurde überraschenderweise festgestellt, dass sich derartiger Teesatz mit oder ohne derartige Teebeutel nicht nur als Zusatzstoff in thermoplastisches Kunststoffmaterial einarbeiten lässt, sondern auch Funktionen derartiger Zusatzstoffe bereitstellen kann.

Der Teesatz wird erfindungsgemäß mit oder ohne Teebeutel in einen Trockenvorgang auf den gewünschten Wassergehalt eingestellt und als Füllstoff in das Kunststoffrohmaterial eingebracht, bevor die Kunststoffschicht ausgeformt wird. Die Mischung und Verarbeitung des Kunststoffrohmaterials zu der Kunststoffschicht kann sowohl in einem Kalander, einem Extruder oder in einem Rührer zur Bereitung einer streichfähigen Beschichtungsmasse erfolgen. Dies richtet sich nach der Auswahl des Kunststoffrohmaterials.

Das Kunststoffrohmaterial kann auf Basis von Polyester oder einem PolyesterCopolymer ausgewählt sein. Ferner kommen Polyurethane, einschließlich Polyurethandispersionen und thermoplastische Urethane in Betracht. Polyamid, Polyolefine, wie Polyethylen, Polypropylen oder Polyester sowie Polyvinylchlorid, insbesondere Weich-PVC können ebenfalls als Kunststoffrohmaterial im Rahmen des erfindungsgemäßen Verfahrens ausgewählt werden.

Die Auswahl des Kunststoffrohmaterials richtet sich dabei primär nach der zur Einarbeitung als Zusatzstoff vorgesehenen Konfiguration des Teesatzes.

Im einfachsten Fall wird loser Teesatz, der ohne Teebeutel angefallen ist, in einem Trockenvorgang auf den gewünschten Wassergehalt eingestellt und durch Vermahlen zu einem Pulver mit einer durchschnittlichen Partikelgröße von bis zu 2000 µm vermahlen. Dieses solchermaßen generierte Teesatzpulver kann nach Belieben und in unterschiedlicher Feinheit in eine streichfähige Beschichtungsmasse als Zusatzstoff eingearbeitet werden um eine streichfähige pastenartige Beschichtung auszubilden. Auch in einem Extrusions- oder Kalandrierverfahren kann derartiger loser Teesatz als Zusatzstoff erfindungsgemäß eingesetzt werden. Als Kunststoffrohmaterial kommen hierbei insbesondere Polyvinylchlorid, vorzugsweise Weich-PVC, Polyurethane, wie Polyurethandispersionen und thermoplastische Urethane, Polyester, Polyethylen, Polypropylen sowie Polyamid und Hybridkonstruktionen derselben in Betracht.

Sofern der Teesatz in Teebeuteln auf Polymerbasis vorliegt, kann dieser Teesatz mitsamt den Teebeuteln auf synthetischer (Polyester-, Polyamid- oder Polymilchsäure-) Basis im Rahmen des erfindungsgemäßen Verfahrens als Zusatzstoff in das Kunststoffrohmaterial eingemischt und als Füllstoffe verarbeitet werden, ohne dass eine Trennung des Teesatzes von den Teebeuteln notwendig wäre. Bislang werden gebrauchte und gegebenenfalls getrocknete Teebeutel auf synthetischer Polyester- oder Polyamidbasis oder auf Biopolymerbasis, insbesondere Polymilchsäure, meist über den Restmüll entsorgt, obwohl beispielsweise auf Polymilchsäure basierende Teebeutel kompostierbar wären.

Erfindungsgemäß ermöglicht eine Extrusion oder Kalanderverarbeitung von Polyestern, Polyester-Copolymeren, thermoplastischen Urethanen oder Polyamiden, dass sich derartige Teebeutel unter der vorherrschenden Scherung und den hohen Temperaturen auflösen können. Die verbleibenden Teesatzanteile werden somit als organischer Füllstoff im Kunststoffrohmaterial verwendet und anschließend zu der Kunststoffschicht ausgeformt. Die Teebeutel können als Ganzes zugegeben werden, eine Aufreinigung oder Vermahlung ist nicht notwendig.

Je nach Zusammensetzung der Teesorten kann der aus dem Teesatz gewonnene Zusatzstoff für das Kunststoffrohmaterial neben seiner Eignung als Füllstoff auch eine Einfärbung und Strukturierung des Kunststoffrohmaterials bewirken. Beispielsweise können Schwarztee-Sorten für dunkle Farben und Partikeleinschlüsse sorgen, während Früchtetees überwiegend Farben im Bereich Rot und Grün erzeugen können.

Sofern der Teesatz hingegen in Teebeuteln aus papierähnlichem Material auf Zellulosebasis vorliegt, was derzeit die meistverkaufte Variante darstellt, sind diese Zellulosefasern mittels Polyolefinbeschichtung verschweißt und dürfen insoweit nicht kompostiert werden. Im Rahmen des erfindungsgemäßen Verfahrens ist es jedoch möglich, diese Teebeutel in einem Kunststoffrohmaterial auf Polyolefinbasis als Zusatzstoff einzuarbeiten. Dazu werden die Teebeutel zunächst bis zum Erreichen des gewünschten Wassergehalts von maximal 20 % getrocknet und vorzugsweise in einem Kalanderprozess dem Kunststoffrohmaterial zugegeben. Eine vorherige Vermahlung oder Zerkleinerung der Teebeutel mitsamt dem enthaltenen Teesatz auf eine Partikelgröße von bis zu 2000 µm ist bevorzugt, da sich ansonsten durch die Zellstofffasern Defekte in der ausgebildeten Kunststoffschicht bilden können, sofern diese nicht aufgeschlossen werden. Auch bei dieser Variante des erfindungsgemäßen Verfahrens ist neben dem Einsatz des Teesatzes als Füllstoff auch eine Einfärbung der erhaltenen Kunststoffschicht möglich, indem eine entsprechende Vorsortierung durchgeführt wird.

Es versteht sich, dass die im Rahmen des erfindungsgemäßen Verfahrens hergestellte Kunststoffschicht sowohl als Monoschicht zur Ausbildung entsprechender Erzeugnisse, beispielsweise Folien verwendet werden kann, wie es auch möglich ist, die Kunststoffschicht nach dem erfindungsgemäßen Verfahren mit weiteren Schichten im Rahmen eines mehrschichtigen Verbundmaterials zu kombinieren. In einem solchen mehrschichtigen Verbundmaterial wird mindestens eine Schicht, gegebenenfalls auch mehrere oder alle Schichten nach dem erfindungsgemäßen Verfahren unter Einbeziehung von Teesatz als Zusatzstoff hergestellt.

Die hergestellten Folien und Verbundmaterialien sind in üblicher Weise weiterverarbeitbar, beispielsweise lackierbar, bedruckbar, prägbar und können sowohl kompakt als auch geschäumt werden, beispielsweise durch Zusatz entsprechender Treibmittel oder durch mechanisches einbringen von Gaseinschlüssen, zum Beispiel im Rahmen eines Schlagschaumes.

Die Rezepturen zur Herstellung der Kunststoffschicht nach dem erfindungsgemäßen Verfahren können neben dem als Zusatzstoff eingesetzten Teesatz einschließlich der gegebenenfalls vorhandenen Teebeutel auch andere übliche Zusatzstoffe, wie Vernetzer, Farbstoffe, Pigmente, Weichmacher, Flammschutzmittel, Biozide, Oberflächenmodifikatoren, Stabilisatoren und/oder Treibmittel in an sich bekannter Weise enthalten.

## Patentansprüche

1. Verfahren zur Herstellung einer Kunststoffschicht auf Basis eines Kunststoffrohmaterials, bei welchem das Kunststoffrohmaterial mit Zusatzstoffen vermischt und anschließend zu der Kunststoffschicht ausgeformt wird, da d u rch gekennzeichnet, dass als Zusatzstoff Teesatz verwendet wird, dessen Wassergehalt 0 bis 20 % beträgt.

2. Verfahren nach Anspruch 1, **dadurch gekennzeichnet, dass** den Teesatz enthaltende Teebeutel in einem Extruder oder Kalander gemeinsam mit dem Kunststoffrohmaterial und weiteren Zusatzstoffen aufgeschmolzen oder in eine streichfähige Beschichtungsmasse aus dem Kunstoffrohmaterial eingemischt und zu der Kunststoffschicht ausgeformt werden.

3. Verfahren nach Anspruch 1 oder 2, **dadurch gekennzeichnet, dass** der Teesatz und/oder Teebeutel vor dem Vermischen mit dem Kunststoffrohmaterial durch Mahlen zu einem Pulver einer durchschnittlichen Partikelgröße von bis zu 2.000 µm zerkleinert wird.

4. Verfahren nach einem der Ansprüche 1 bis 3, **dadurch gekennzeichnet, dass** das Kunststoffrohmaterial auf Basis von Polyester, Polyurethanen, Polyamid, Polyolefinen oder Polyvinylchlorid ausgebildet ist.

5. Verfahren nach einem der Ansprüche 1 bis 4, **dadurch gekennzeichnet, dass** als weitere Zusatzstoffe Vernetzer, Farbstoffe, Pigmente, Weichmacher, Flammschutzmittel, Biozide, Oberflächenmodifikatoren, Stabilisatoren und/oder Treibmittel vorgesehen sind.

## Claims

1. Process for producing a plastic layer based on a plastic raw material, wherein the plastic raw material is mixed with additives and subsequently extruded to afford the plastic layer, **characterized in that** tea grounds having a water content of 0% to 20% are used as an additive.

2. Process according to Claim 1, **characterized in that** tea bags containing the tea grounds are melted in an extruder or calender together with the plastic raw material and further additives or are incorporated into a spreadable coating composition composed of the plastic raw material and extruded to afford the plastic layer.

3. Process according to Claim 1 or 2, **characterized in that** the tea grounds and/or tea bag are comminuted by milling to afford a powder having an average particle size of up to 2000 µm before the mixing with the plastic raw material.

4. Process according to any of Claims 1 to 3, **characterized in that** the plastic raw material is formed based on polyester, polyurethanes, polyamide, polyolefins or polyvinyl chloride.

5. Process according to any of Claims 1 to 4, **characterized in that** crosslinkers, dyes, pigments, plasticizers, flame retardants, biocides, surface modifiers, stabilizers and/or blowing agents are provided as further additives.

## Revendications

1. Procédé pour la production d'une couche de matière pastique à base d'une matière première synthétique, dans lequel la matière première synthétique est mélangée avec des additifs et ensuite mise sous forme de la couche de matière plastique, **caractérisé en ce qu'**en tant qu'additif est utilisé du marc de thé dont la teneur en eau vaut de 0 à 20 %;

2. Procédé selon la revendication 1, **caractérisé en ce que** des sachets de thé contenant du marc de thé sont fondus dans une extrudeuse ou calandre conjointement avec la matière première synthétique et des additifs supplémentaires, ou incorporés dans une matière de revêtement apte à l'étalement à base de la matière première synthétique et mis sous forme de la couche de matière plastique

3. Procédé selon la revendication 1 ou 2, **caractérisé en ce qu'**avant d'être mélangé(s) avec la matière première synthétique le marc de thé et/ou le sachet de thé est/sont fragmenté(s) par broyage en une poudre ayant une taille moyenne de particule de 2 à 2 000 µm.

4. Procédé selon l'une quelconque des revendications 1 à 3, **caractérisé en ce que** la matière première synthétique est constituée à base de polyesters, polyuréthanes, polyamide, polyoléfines ou poly(chlorure de vinyle).

5. Procédé selon l'une quelconque des revendications 1 à 4, **caractérisé en ce qu'**en tant qu'additifs supplémentaires sont prévus des agents de réticulation, colorants, pigments, plastifiants, agents ignifuges, biocides, modificateurs de surface, stabilisants et/ou agents porogènes.
